# EUROPÄISCHE PATENTSCHRIFT

(11) **EP 2 575 566 B1**
(45) Veröffentlichungstag und Bekanntmachung des Hinweises auf die Patenterteilung: **16.05.2018**
(21) Anmeldenummer: 11725322.9
(22) Anmeldetag: 20.05.2011
(51) Int. Cl.: A47J 31/36

(54) **BRÜHVORRICHTUNG ZUM EXTRAHIEREN EINER PORTIONSKAPSEL UND VERFAHREN ZUM BETRIEB EINER BRÜHVORRICHTUNG**
BREWING DEVICE FOR EXTRACTING A PORTION CAPSULE AND METHOD FOR OPERATING A BREWING DEVICE
DISPOSITIF D'INFUSION DESTINÉ À LA LIXIVIATION D'UNE DOSETTE ET PROCÉDÉ DE FONCTIONNEMENT D'UN DISPOSITIF D'INFUSION

(30) Priorität: 14.02.2011 DE 102011011204; 28.05.2010 DE 102010021847
(43) Veröffentlichungstag der Anmeldung: 10.04.2013
(73) Patentinhaber: Eugster/Frismag AG Elektrohaushaltgeräte, 8580 Amriswil (CH)
(72) Erfinder: FISCHER, Daniel, CH-8590 Romanshorn (CH)
(74) Vertreter: Wolff, Felix
(86) Internationale Anmeldenummer: PCT/EP2011/002526
(87) Internationale Veröffentlichungsnummer: WO 2011/147553

(56) Entgegenhaltungen:
- EP-A1- 2 044 867
- WO-A1-2007/134960
- WO-A1-2010/032271
- WO-A2-2007/110842
- US-A1- 2005 235 834

## Beschreibung

### Stand der Technik

Die vorliegende Erfindung betrifft eine Brühvorrichtung zum Extrahieren einer Portionskapsel mit einem ersten Brühkammerelement und einem zweiten Brühkammerelement, wobei das erste Brühkammerelement zwischen einer Ladestellung, in welcher das erste und das zweite Brühkammerelement voneinander beabstandet sind, und einer Extraktionsstellung, in welcher das erste und das zweite Brühkammerelement zur Bildung einer im Wesentlichen geschlossenen Brühkammer einander angenähert sind, bewegbar ist.

Solche Brühvorrichtungen sind allgemein bekannt, beispielsweise aus den Druckschriften WO2007/134960A1 und US2005/0235834A1. Aus der Druckschrift EP 2 077 087 A1 ist beispielsweise eine Brühvorrichtung für eine Portionskapsel bekannt, welche ein zweites Brühkammerelement in Form eines Aufnahmeelements mit einem Hohlraum zur Aufnahme der Portionskapsel und ein erstes Brühkammerelement in Form eines Verschlusselements zum Verschließen des Hohlraums umfasst. Das Verschlusselement umfasst dabei eine Injektionsanordnung zum Einleiten von Extraktionsflüssigkeit in die Portionskapsel, während das Aufnahmeelement eine Extraktionsanordnung umfasst, um die mit einer in der Portionskapsel angeordneten Getränkesubstanz wechselwirkende Extraktionsflüssigkeit aus der Portionskapsel abzuführen und zur Bereitstellung eines Getränks einem Trinkgefäß zuzuführen. Zur Befüllung der Brühvorrichtung mit der Portionskapsel wird das Verschlusselement in eine Ladestellung überführt, in der es von dem Aufnahmeelement beabstandet ist. Anschließend wird die Portionskapsel in einen Zwischenraum zwischen dem Aufnahmeelement und dem Verschlusselement eingeführt und daraufhin das Verschlusselement in Richtung des Aufnahmeelements entlang einer axialen Richtung verschoben, wodurch die Portionskapsel in den Hohlraum des Aufnahmeelements eingeführt wird. Das Aufnahmeelement und das Verschlusselement bilden in der Extraktionsstellung eine im Wesentlichen geschlossene Brühkammer zur Extraktion der Portionskapsel. Die Getränkesubstanz umfasst insbesondere zu extrahierenden Röst- oder Instant-Kaffee. Ferner ist bekannt, derartige Brühvorrichtungen mit Perforationsmitteln auszustatten, welche die Portionskapsel zum Einleiten der Extraktionsflüssigkeit oder zum Ableiten des Getränkeextrakts während oder nach dem Schließen der Brühkammer perforieren.

Nachteiligerweise besteht an solchen Brühvorrichtungen die Gefahr, dass die Portionskapsel beim Einführen in den Zwischenraum zwischen das erste und das zweite Brühkammerelement an den Perforationsmitteln des ersten Brühkammerelements hängen bleibt, so dass ein fehlerfreies Einführen der Portionskapsel nicht möglich ist. Eine nicht korrekt eingeführte bzw. positionierte Portionskapsel kann dabei zur Beschädigung der Brühvorrichtung führen.

Der Erfindung liegt daher die Aufgabe zu Grunde, eine Brühvorrichtung zum Extrahieren einer Portionskapsel bereitzustellen, welche die Nachteile des Standes der Technik nicht aufweist und ein gegenüber dem Stand der Technik vergleichsweise sicheres und fehlerfreies Einführen der Portionskapsel ermöglicht.

### Offenbarung der Erfindung

Diese Aufgabe wird erfindungsgemäß durch eine Brühvorrichtung zum Extrahieren einer Portionskapsel gemäß Anspruch 1 gelöst. Vorteilhafte Weiterbildungen sind in den abhängigen Ansprüchen aufgeführt. Auf diese Weise ist es möglich, dass das erste Brühkammerelement zumindest in der Ladestellung gegenüber dem zweiten Brühkammerelement geneigt ausgerichtet ist und beim Verfahren von der Ladestellung in die Extraktionsstellung insbesondere erst kurz vor dem Erreichen der Extraktionsstellung in eine zum zweiten Brühkammerelement korrespondierende Ausrichtung gebracht wird. Vorteilhafterweise wird aufgrund der Neigung des ersten Brühkammerelements in der Ladestellung somit die Gefahr, dass die Portionskapsel beim Einführen in den Zwischenraum zwischen dem ersten und dem zweiten Brühkammerelement am ersten Brühkammerelement und insbesondere an ersten Perforationsmitteln des ersten Brühkammerelements hängen bleibt, gegenüber dem Stand der Technik reduziert. Bei einer hastigen Anwendung der Brühvorrichtung durch einen Benutzer wird häufig der Schließmechanismus zum Verfahren des ersten Brühkammerelements von der Ladestellung in die Extraktionsstellung schon betätigt, obwohl die Portionskapsel noch nicht korrekt in der Zwischenstellung positioniert ist. Dies würde ein Verkeilen der Portionskapsel zwischen einer Zuführöffnung für die Portionskapsel und dem ersten Brühkammerelement bewirken, wenn das erste Brühkammerelement schon zu Beginn der Bewegung von der Ladestellung in die Extraktionsstellung senkrecht ausgerichtet wäre und/oder zunächst in die Senkrechte verschwenkt werden würde. Bei der Brühvorrichtung gemäß der vorliegenden Erfindung ist die Gefahr des Verkeilens reduziert, da beim Betätigen des Schließmechanismus das erste Brühkammerelement zunächst in der geneigten Position verbleibt und nur axial in Richtung des zweiten Brühkammerelements verfahren wird. Die Ausrichtung der ersten Brühkammerelements erfolgt erst deutlich später, wenn die Portionskapsel insbesondere bereits von der Zuführöffnung in Richtung des zweiten Brühkammerelements beabstandet ist. Bevorzugt wird das erste Brühkammerelement während der Schwenkbewegung um einen Winkel zwischen 1 und 30 Grad, besonders bevorzugt zwischen 1 und 15 Grad und ganz besonders bevorzugt um im Wesentlichen 6 Grad verschwenkt. Vorzugsweise wird das erste Brühkammerelement bei der Bewegung von der Ladestellung in die Extraktionsstellung zuerst ausschließlich linear entlang der axialen Richtung in Richtung des zweiten Brühkammerelements verschoben, anschließend zusätzlich zur linearen Verschiebung entlang der axialen Richtung in Richtung des zweiten Brühkammerelements noch um die Schwenkachse (welche ebenfalls entlang der axialen Richtung wandert) verschwenkt und anschließend wieder ausschließlich linear entlang der axialen Richtung in Richtung des zweiten Brühkammerelements verschoben. Die Endfläche des ersten Brühkammerelements ist in der Laderichtung vorzugsweise derart gegenüber der zur axialen Richtung senkrechten Ebene geneigt, dass der Abstand zwischen dem ersten und dem zweiten Brühkammerelement in der Nähe der Zuführöffnung am größten ist. Die axiale Richtung erstreckt sich vorzugsweise in einer horizontalen Ebene, d.h. senkrecht zum Schwerefeld.

Gemäß einer bevorzugten Weiterbildung ist vorgesehen, dass eine dem zweiten Brühkammerelement zugewandte Endfläche des ersten Brühkammerelements in der Ladestellung gegenüber einer zur axialen Richtung senkrecht ausgerichteten Ebene geneigt ist und in der Extraktionsstellung senkrecht zur axialen Richtung ausgerichtet ist, so dass in vorteilhafter Weise ein im Wesentlichen hermetisch dichtes Verschließen der Brühkammer durch das erste Brühkammerelement gewährleistet ist und gleichzeitig das besonders sichere und störungsunanfällige Einführen der Portionskapsel quer zur axialen Richtung ermöglicht wird. Die Ebene ist vorzugsweise parallel zum Schwerefeld der Erde und/oder parallel zu einer Laderichtung, entlang welcher die Portionskapsel in die Brühvorrichtung eingeführt wird, ausgerichtet.

Gemäß einer bevorzugten Weiterbildung ist vorgesehen, dass das erste Brühkammerelement mittels seitlicher Führungsschienen zwischen der Ladestellung und der Extraktionsstellung geführt ist, wobei die Führungsschienen sich im Wesentlichen entlang der axialen Richtung erstrecken und auf einem dem zweiten Brühkammerelement zugewandten Bereich einen Versatz entlang des Schwerefelds, entlang der Laderichtung und/oder senkrecht zur axialen Richtung aufweisen. Die seitlichen Führungsschienen umfassen vorzugsweise ein Langloch in einer Gehäusewandung der Brühvorrichtung, wobei das erste Brühkammerelement über einen in dem Langloch angeordneten Querbolzen geführt wird. Durch den Versatz in der Führungsschiene wird automatisch die Schwenkbewegung des ersten Brühkammerelements verursacht, wenn der Querbolzen den Versatz passiert. Der Versatz ist vorzugsweise zwischen zwei ausschließlich entlang der axialen Richtung verlaufenden Abschnitten der Führungsschiene angeordnet.

Gemäß einer bevorzugten Weiterbildung ist vorgesehen, dass die Brühvorrichtung eine Zuführöffnung aufweist, welche in der Ladestellung zum Zuführen der Portionskapsel zwischen das erste und das zweite Brühkammerelement entlang einer Laderichtung vorgesehen ist, wobei das erste Brühkammerelement eine dem zweiten Brühkammerelement zugewandte Endfläche aufweist, welche in der Ladestellung gegenüber der Laderichtung geneigt ausgerichtet ist, so dass in vorteilhafter Weise die oben beschriebene einfache, sichere und störungsunanfällige Zuführung der Portionskapsel gewährleistet wird. Die Endfläche ist in der Extraktionsstellung vorzugsweise im Wesentlichen parallel zur Laderichtung und/oder zum Schwerefeld ausgerichtet.

Gemäß einer bevorzugten Weiterbildung ist vorgesehen, dass das erste Brühkammerelement wenigstens einen Kapselanschlag zum Halten der Portionskapsel aufweist, welcher starr mit dem ersten Brühkammerelement verbunden ist und welcher entlang des Schwerefeldes im Wesentlichen unterhalb der Brühkammer angeordnet ist. In vorteilhafter Weise wird dadurch die Portionskapsel beim Befüllen der Brühvorrichtung, beim Transport von der Ladestellung in die Extraktionsstellung und teilweise beim Rücktransport aus der Extraktionsstellung durch den Kapselanschlag gehalten. Der Kapselanschlag ist vorzugsweise einstückig mit dem ersten Brühkammerelement ausgebildet, so dass eine vergleichsweise kostengünstige und einfache Herstellung erzielt wird. Der Kapselanschlag ist optional einstückig bzw. starr mit dem ersten Brühkammerelement verbunden.

Gemäß einer bevorzugten Weiterbildung ist vorgesehen, dass die Brühvorrichtung wenigstens einen Kapselauswerfer aufweist, welcher entlang des Schwerefeldes im Wesentlichen unterhalb der Brühkammer angeordnet ist und welcher beim Bewegen des ersten Brühkammerelements von der Extraktionsstellung in die Ladestellung ein Abstreifen der Portionskapsel von einem mit dem ersten Brühkammerelement starr verbundenen Kapselanschlag bewirkt. In vorteilhafter Weise wird somit ein zuverlässig arbeitender automatischer Auswurfmechanismus bereitgestellt, welcher die Portionskapsel beim Zurückfahren des ersten Brühkammerelements von der Extraktionsstellung in die Ladestellung auswirft.

Gemäß einer bevorzugten Weiterbildung ist vorgesehen, dass der Kapselauswerfer einen sich im Wesentlichen entlang der axialen Richtung erstreckenden Arm mit einem freistehenden Ende aufweist, wobei das freistehende Ende in Richtung des zweiten Brühkammerelements eine zur axialen Richtung im Wesentlichen senkrechte Anschlagsfläche aufweist, welche beim Bewegen des ersten Brühkammerelements von der Extraktionsstellung in die Ladestellung ein Abstreifen der Portionskapsel vom Kapselanschlag bewirkt, und wobei das freistehende Ende auf einer dem zweiten Brühkammerelement abgewandten Seite eine Führungsschräge aufweist, welche beim Bewegen des ersten Brühkammerelements von der Ladestellung in die Extraktionsstellung ein Verweilen der Portionskapsel auf dem Kapselanschlag erlaubt. In einfacher Weise wird somit ein automatischer Kapselauswurf-mechanismus realisiert, welcher einen sicheren Transport der Kapsel von der Ladestellung in die Extraktionsstellung, einen sicheren Rücktransport der Kapsel aus der Extraktionsstellung in Richtung der Ladestellung und ferner einen zuverlässigen Auswurf der Kapsel vor dem Wiedererreichen der Ladestellung während dem Rücktransport erlaubt. Der Kapselanschlag ist vorzugsweise derart ausgebildet, dass zumindest ein freies Ende des Kapselanschlags elastisch von der Brühkammer weg, d.h. insbesondere entlang dem Schwerefeld nach unten, verschwenkt werden kann, so dass die Portionskapsel zwar ohne großen Widerstand zusammen mit dem ersten Brühkammerelement von der Ladestellung in die Extraktionsstellung fahren kann, jedoch beim Zurückfahren von der Extraktionsstellung in die Ladestellung kurz vor dem Erreichen der Ladestellung gegen den Kapselauswerfer stößt und dabei von dem Kapselanschlag geschoben wird, so dass die Portionskapsel unter Schwerkrafteinwirkung aus dem Bereich zwischen dem ersten und zweiten Brühkammerelement ausgeworfen wird.

Gemäß einer bevorzugten Weiterbildung ist vorgesehen, dass die Brühvorrichtung derart ausgebildet ist, dass eine Orientierung der Portionskapsel in der Ladestellung im Wesentlichen identisch einer Orientierung der Portionskapsel in der Extraktionsstellung ist, wobei ein Kapseldeckel der Portionskapsel vorzugsweise im Wesentlichen parallel zum Schwerefeld und/oder zur Laderichtung ausgerichtet ist. Eine Umorientierung der Portionskapsel während einer Bewegung des ersten Brühkammerelements von der Ladestellung in die Extraktionsstellung ist somit nicht notwendig, so dass auf sichere Weise Fehlfunktionen, welche beispielsweise durch ein Verrutschen oder Verkanten der Portionskapsel infolge einer Umorientierung der Portionskapsel in der Brühvorrichtung entstehen können, vermieden werden. Die Fehleranfälligkeit der Brühvorrichtung wird auf diese Weise reduziert.

Gemäß einer bevorzugten Weiterbildung ist vorgesehen, dass das erste Brühkammerelement erste Perforationsmittel aufweist, welche senkrecht von der Endfläche in Richtung des zweiten Brühkammerelements abstehen und welche vorzugsweise antiparallel zum Schwerefeld im Wesentlichen in einem dem Kapselanschlag abgewandten Bereich der Endfläche angeordnet sind. Die Endfläche des ersten Brühkammerelements ist in der Laderichtung vorzugsweise derart gegenüber der zur axialen Richtung senkrechten Ebene geneigt, dass der Abstand zwischen dem ersten und dem zweiten Brühkammerelement in der Nähe der Zuführöffnung am größten ist, so dass in diesem Bereich genügen Raum vorhanden ist, um die abstehenden ersten Perforationsmittel anzuordnen, ohne dass dabei ein Verhaken der Portionskapsel mit den ersten Perforationsmittel während des Einführvorgangs droht.

Gemäß einer bevorzugten Weiterbildung ist vorgesehen, dass die Brühvorrichtung derart ausgebildet ist, dass die Portionskapsel während der Schwenkbewegung um die Schwenkachse von den ersten Perforationsmitteln perforiert wird. In vorteilhafter Weise wird das Drehmoment des sich verschwenkenden ersten Brühkammerelement zur Erzeugung der Perforierung ausgenutzt. Der benötigte Kraftaufwand für einen Benutzer wird daher reduziert und der Bedienungskomfort der Brühvorrichtung erhöht.

Gemäß einer bevorzugten Weiterbildung ist vorgesehen, dass das erste Brühkammerelement eine Zuführeinrichtung umfasst, welche in der Extraktionsstellung zum Zuführen von Extraktionsflüssigkeit in die mittels der ersten Perforationsmittel perforierten Portionskapsel vorgesehen sind, so dass in der Extraktionsstellung der Extraktionsvorgang zum Extrahieren der in der Portionskapsel enthaltenen Getränkesubstanz durchführbar ist.

Gemäß einer bevorzugten Weiterbildung ist vorgesehen, dass das erste Brühkammerelement mit seitlichen Halteärmchen gekoppelt ist, welche einen Kapselflansch der Portionskapsel hintergreifen und welche mit dem ersten Brühkammerelement zumindest teilweise zwischen der Ladestellung und der Extraktionsstellung entlang der axialen Richtung bewegbar sind. In vorteilhafter Weise wird somit einerseits die Beibehaltung der Portionskapselposition zur horizontalen Achse in der Ladestellung, sowie während des Transports von der Ladestellung in die Extraktionsstellung gewährleistet. Andererseits wird die Portionskapsel nach dem Extraktionsvorgang beim Zurückfahren des ersten Brühkammerelements zumindest teilweise aus dem zweiten Brühkammerelement wieder zurückgezogen, um einen Auswurf der Portionskapsel zu ermöglichen. Die Halteärmchen umschließen den Kapselflansch insbesondere lediglich in Richtung des zweiten Brühkammerelements. Die Halteärmchen sind optional einstückig bzw. starr mit dem ersten Brühkammerelement verbunden.

Gemäß einer bevorzugten Weiterbildung ist vorgesehen, dass die Halteärmchen entlang der axialen Richtung relativ zum ersten Brühkammerelement bewegbar sind und/oder dass die Halteärmchen mit einem Kniehebelgelenk gekoppelt sind, welches zum Bewegen des ersten Brühkammerelements zwischen der Ladestellung und der Extraktionsstellung vorgesehen ist. Auf dieses Weise wird eine besonders bauraumkompakte und stabile Befestigung der Halteärmchen erzielt. Die Relativbewegung zwischen den Halteärmchen und dem ersten Brühkammerelement erlaubt ferner eine Beabstandung des Kapselflansches vom ersten Brühkammerelement während der Rückwärtsbewegung des ersten Brühkammerelements von der Extraktionsstellung in die Ladestellung. Ein reibungsfreies Auswerfen der Portionskapsel durch den Kapselauswerfer wird hierdurch begünstigt.

Gemäß einer bevorzugten Weiterbildung ist vorgesehen, dass das zweite Brühkammerelement wenigstens ein zweites Perforationsmittel aufweist, welches sich vom zweiten Brühkammerelement im Wesentlichen parallel zur axialen Richtung in Richtung des ersten Brühkammerelements erstreckt. In vorteilhafter Weise wird somit während des Extraktionsvorgangs ein Ablaufen des Getränkeextrakts aus der Portionskapsel gewährleistet.

Gemäß einer bevorzugten Weiterbildung ist vorgesehen, dass das zweite Brühkammerelement ein hohles Glockenelement zur Aufnahme der Portionskapsel in der Extraktionsstellung umfasst, wobei ein Bodenbereich des Glockenelements bevorzugt wenigstens eine Vertiefung zum Ableiten von Extraktionsflüssigkeit aus der mittels des zweiten Perforationsmittels perforierten Portionskapsel umfasst, wobei das zweite Perforationsmittel besonders bevorzugt im Bereich der Vertiefung angeordnet ist und wobei die Vertiefung ganz besonders bevorzugt in einen Ablaufkanal zum Abführen der Extraktionsflüssigkeit aus der Brühkammer mündet. Die Vertiefung umfasst vorzugsweise eine Stütz- und/oder Säulenstruktur, wodurch die Portionskapsel im Bereich der Vertiefung von dem zweiten Brühkammerelement sicher beabstandet wird. Auf diese Weise wird eine Verringerung des Querschnitts der Vertiefung durch den Kapselboden verhindert, so dass ein Ableiten der Extraktionsflüssigkeit zu jedem Zeitpunkt sichergestellt werden kann.

Gemäß einer bevorzugten Weiterbildung ist vorgesehen, dass in der Extraktionsstellung der Kapselanschlag im Wesentlichen unterhalb des zweiten Brühkammerelements angeordnet ist und/oder in der Extraktionsstellung die Halteärmchen jeweils seitlich neben dem zweiten Brühkammerelement angeordnet sind. In vorteilhafter Weise weist das zweite Brühkammerelement entsprechende Einbuchtungen auf, in welche der Kapselanschlag und/oder die Halteärmchen in der Extraktionsstellung entsprechend einfahren. Gegenüber dem Stand der Technik ist somit keine seitliche Verschwenkbarkeit der Halteärmchen erforderlich, so dass in vorteilhafter Weise der Herstellungsaufwand der Brühvorrichtung reduziert ist.

Ein weiterer Gegenstand der vorliegenden Erfindung ist ein Verfahren zum Betrieb einer Brühvorrichtung gemäß Anspruch 12. Vorteilhafte Weiterbildungen sind wiederum in den abhängigen Ansprüchen aufgeführt. Auf diese Weise wird - wie oben ausgeführt - eine störungsfreie und einfache Zuführung der Portionskapsel in den Zwischenbereich zwischen das erste und das zweite Brühkapselelement erzielt. Insbesondere wird die Gefahr reduziert, dass die Portionskapsel bei einer zu hastigen Inbetriebnahme der Brühvorrichtung verkantet. Vorzugsweise wird das erste Brühkammerelement bei der Bewegung von der Ladestellung in die Extraktionsstellung zuerst ausschließlich linear entlang der axialen Richtung in Richtung des zweiten Brühkammerelements verschoben, anschließend zusätzlich zur linearen Verschiebung entlang der axialen Richtung in Richtung des zweiten Brühkammerelements noch um die Schwenkachse (welche ebenfalls entlang der axialen Richtung wandert) verschwenkt und anschließend wieder ausschließlich linear entlang der axialen Richtung in Richtung des zweiten Brühkammerelements verschoben. Beim Zurückfahren des ersten Brühkammerelements von der Extraktionsstellung in die Ladestellung werden diese Bewegungsschritte gerade umgekehrt durchlaufen.

Gemäß einer bevorzugten Weiterbildung ist vorgesehen, dass im zweiten Verfahrensschritt das erste Brühkammerelement durch die Schwenkbewegung von einer Position, in welcher eine dem zweiten Brühkammerelement zugewandte Endfläche des ersten Brühkammerelements gegenüber einer zur axialen Richtung ausgerichteten Ebene geneigt ist, in eine Position, in welcher die Endfläche senkrecht zur axialen Richtung ausgerichtet ist, bewegt wird. Auf diese Weise wird - wie oben ausgeführt - ein sicheres und störunanfälliges Einführen der Kapsel sichergestellt. Bevorzugt wird das erste Brühkammerelement während der Schwenkbewegung um einen Winkel zwischen 1 und 30 Grad, besonders bevorzugt zwischen 1 und 15 Grad und ganz besonders bevorzugt um im Wesentlichen 6 Grad verschwenkt. Die Endfläche des ersten Brühkammerelements ist in der Laderichtung vorzugsweise derart gegenüber der zur axialen Richtung senkrechten Ebene geneigt, dass der Abstand zwischen dem ersten und dem zweiten Brühkammerelement in der Nähe der Zuführöffnung am größten ist.

Gemäß einer bevorzugten Weiterbildung ist vorgesehen, dass während des zweiten Verfahrensschrittes das erste Brühkammerelement durch die Schwenkbewegung von einer Position, in welcher eine dem zweiten Brühkammerelement zugewandte Endfläche des ersten Brühkammerelements gegenüber einer Laderichtung, entlang welcher in der Ladestellung die Portionskapsel zwischen das erste und das zweite Brühkammerelement eingeführt wird, geneigt ist, in eine Position, in welcher die Endfläche parallel zur Laderichtung ausgerichtet ist, bewegt wird. Auf diese Weise wird - wie oben ausgeführt - ein sicheres und störunanfälliges Einführen der Kapsel sichergestellt und gleichzeitig wird ein dichtes Verschließen der Brühkammer während des Extraktionsvorgangs erzielt.

Gemäß einer bevorzugten Weiterbildung ist vorgesehen, dass die in der Ladestellung zwischen das erste und das zweite Brühkammerelement eingeführte Portionskapsel mittels eines Kapselanschlags gehalten wird, wobei die Portionskapsel mittels eines Kapselauswerfers außer Kontakt mit dem Kapselanschlag gebracht wird, während in einem dritten Verfahrensschritt das erste Brühkammerelement von der Extraktionsstellung in die Ladestellung bewegt wird. In vorteilhafter Weise wird somit ein automatisches Auswerfen der Portionskapsel bei der Rückwärtsbewegung des ersten Brühkammerelements von der Extraktionsstellung in die Ladestellung erzielt.

Gemäß einer bevorzugten Weiterbildung ist vorgesehen, dass die Portionskapsel nicht außer Kontakt mit dem Kapselanschlag gebracht wird, während im zweiten Verfahrensschritt das erste Brühkammerelement von der Ladestellung in die Extraktionsstellung bewegt wird. In vorteilhafter Weise wird somit während der Bewegung des ersten Brühkammerelements in Richtung der Extraktionsstellung ein ungewolltes Auswerfen einer noch nicht extrahierten Portionskapsel vermieden.

Gemäß einer bevorzugten Weiterbildung ist vorgesehen, dass während des zweiten Verfahrensschrittes die Orientierung der Portionskapsel konstant gehalten wird, wobei vorzugsweise die Orientierung eines Kapseldeckels der Portionskapsel parallel zum Schwerefeld und/oder parallel zur Laderichtung gehalten wird, so dass eine Umorientierung der Portionskapsel innerhalb der Brühvorrichtung nicht notwendig ist und dadurch die Fehleranfälligkeit der Brühvorrichtung verringert wird.

Gemäß einer bevorzugten Weiterbildung ist vorgesehen, dass im zweiten Verfahrensschritt die Portionskapsel während oder zeitlich nach der Schwenkbewegung des ersten Brühkammerelements mittels erster Perforationsmittel des ersten Brühkammerelements perforiert wird. In vorteilhafter Weise wird das Drehmoment des sich verschwenkenden ersten Brühkammerelement zur Erzeugung der Perforierung ausgenutzt. Der benötigte Kraftaufwand für einen Benutzer wird daher reduziert und der Bedienungskomfort der Brühvorrichtung erhöht.

Gemäß einer bevorzugten Weiterbildung ist vorgesehen, dass im zweiten Verfahrensschritt die Portionskapsel beim Erreichen der Extraktionsstellung mittels wenigstens eines zweiten Perforationsmittels des zweiten Brühkammerelements perforiert wird, wobei die Perforierung mittels des zweiten Perforierungsmittels zeitlich nach der Perforierung mittels des ersten Perforierungsmittels durchgeführt wird. In vorteilhafter Weise wird der benötigte Kraftaufwand zur Perforierung der Portionskapsel somit reduziert.

Die Erfindung wird nachfolgend anhand von Zeichnungen näher erläutert. Die Zeichnungen illustrieren lediglich beispielhafte Ausführungsformen, welche den wesentlichen Erfindungsgedanken nicht einschränken.
- **Figuren 1a bis 1k**: zeigen schematische Schnittbildansichten einer Brühvorrichtung gemäß einer ersten Ausführungsform.
- **Figuren 2a und 2b**: zeigen weitere schematische Schnittbildansichten einer Brühvorrichtung gemäß der ersten Ausführungsform.
- **Figur 3**: zeigt eine Frontalansicht des ersten Brühkammerelements einer Brühvorrichtung gemäß der ersten Ausführungsform.
- **Figuren 4a und 4b**: zeigen schematische Schnittbildansichten einer Brühvorrichtung gemäß einer zweiten Ausführungsform.
- **Figuren 5a und 5b**: zeigen weitere schematische Schnittbildansichten einer Brühvorrichtung gemäß der zweiten Ausführungsform.

In den verschiedenen Figuren sind gleiche Teile stets mit den gleichen Bezugszeichen versehen und werden daher in der Regel auch jeweils nur einmal benannt bzw. erwähnt.

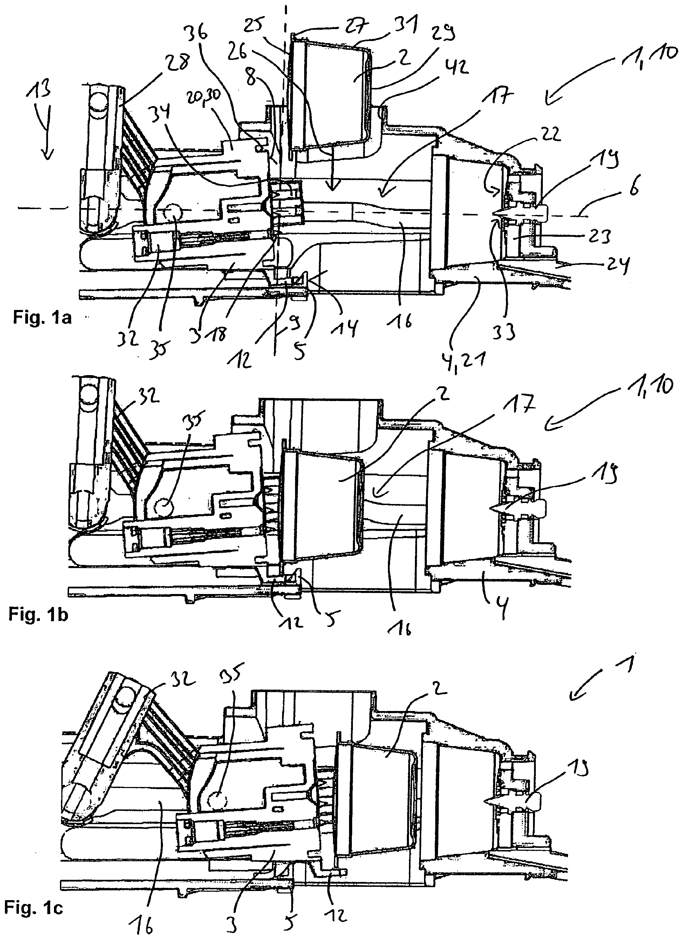

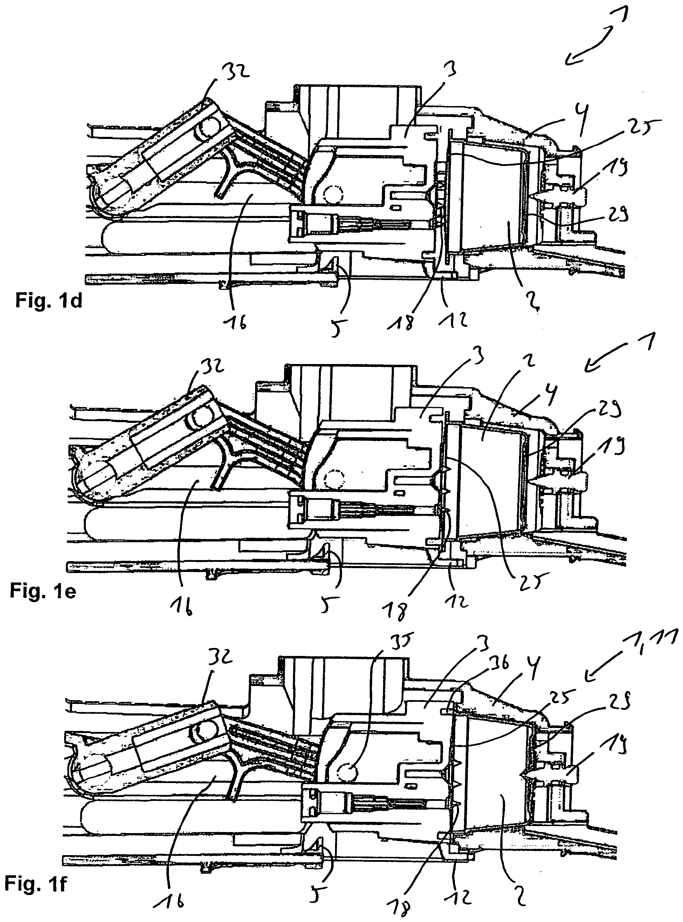

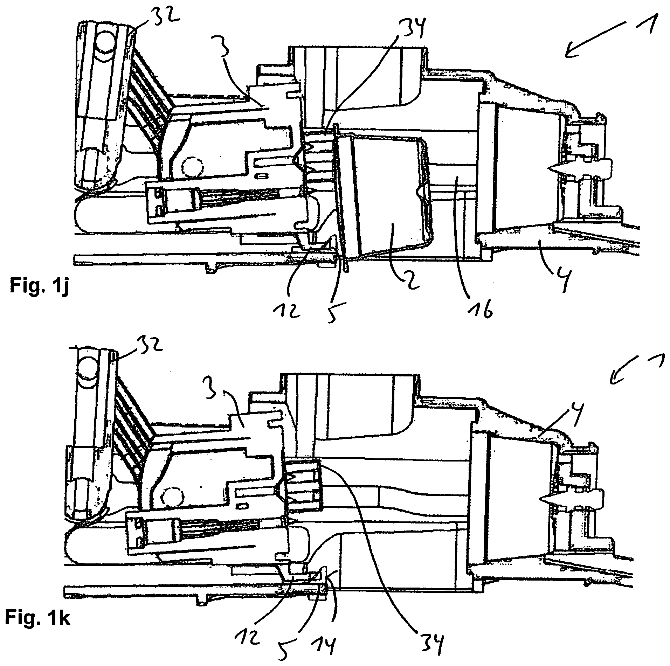

In **Figuren 1a bis 1k** sind schematische Schnittbildansichten einer Brühvorrichtung 1 zum Extrahieren einer Portionskapsel 2 gemäß einer ersten Ausführungsform dargestellt. Die Brühvorrichtung 1 umfasst dabei ein als Aufnahmeelement bzw. teilweise hohles Glockenelement 21 ausgebildetes erstes Brühkammerelement 3 und ein als Verschlusselement 30 bzw. Kolben ausgebildetes zweites Brühkammerelement 4. Das erste Brühkammerelement 3 ist relativ zum zweiten Brühkammerelement 4 entlang einer axialen Richtung 6 zwischen einer in Figuren 1a und 1k illustrierten Ladestellung 17 und einer in Figur 1f illustrierten Extraktionsstellung 11 bewegbar.

Die Portionskapsel 2 umfasst einen aus Kunststoff gefertigten und topfförmig ausgebildeten Kegelstumpf 31. Der Kegelstumpf 31 wird mittels eines aus Kunststoff- oder Aluminiumfolie gefertigten Kapseldeckels 25 luftdicht verschlossen. Innerhalb der Portionskapsel 2 befindet sich eine Getränkesubstanz, insbesondere ein mittels einer Extrahierflüssigkeit extrahierbares Röstkaffeepulver. Optional weist die Portionskapsel 2 ein nicht abgebildetes Filterelement auf, welches vom Kapselboden 29 beabstandet ist und zwischen dem Kapselboden 29 und der Getränkesubstanz angeordnet ist. Der Kapseldeckel 25 ist im Bereich eines Kapselflansches 27 mit dem Kegelstumpf 31 verklebt oder verschweißt.

Das erste Brühkammerelement 3 weist auf einer dem zweiten Brühkammerelement 4 zugewandten Endfläche 8 eine Mehrzahl von ersten Perforationsmitteln 18 auf. Die ersten Perforationsmittel 18 umfassen jeweils eine Perforationsspitze, welche in Richtung des zweiten Brühkammerelements 4 von der Endfläche 8 abstehen. Ferner sind in der Endfläche 8 Wasseraustrittsöffnungen ausgebildet (aus perspektivischen Gründen in den Figuren 1a bis 1k nicht zu erkennen), wobei immer genau eine Wasseraustrittsöffnung in der Nähe einer Perforationsspitze angeordnet ist. Das erste Brühkammerelement 3 weist ferner einen Wasserzuführkanal 32 auf, welcher zur Zuleitung von Extraktionsflüssigkeit an die Wasseraustrittsöffnungen vorgesehen ist. Das erste Brühkammerelement 3 weist ferner an seiner Unterseite ein starr und insbesondere einstückig mit dem ersten Brühkammerelement 3 verbundenen Kapselanschlag 12 auf, welcher in der Extraktionsstellung 11 unterhalb der Brühkammer 1' und unterhalb des zweiten Brühkammerelements 4 angeordnet ist. Ferner weist das erste Brühkammerelement 3 zwei seitliche Halteärmchen 34 auf, deren freien Enden einander zugewandt sind und den Kapselflansch 27 seitlich umfassen. Das zweite Brühkammerelement 4 weist ein zweites Perforationsmittel 19 auf, welches eine in Richtung des ersten Brühkammerelements 3 weisende Aufstechspitze umfasst, die innerhalb des Hohlraums angeordnet ist und vorzugsweise über einen Rastverschluss lösbar mit dem zweiten Brühkammerelement 4 verbunden ist. Die Aufstechspitze ist mit seitlichen Nuten 33 versehen, welche sich parallel zur axialen Richtung 6 erstrecken. Im Bereich der Aufstechspitze weist das zweite Brühkammerelement 4 eine Vertiefung 23 im Bodenbereich 22 des Hohlraums auf, in welche ein Ablaufkanal 24 mündet.

In **Figur 1a** ist das erste Brühkammerelement 3 in der Ladestellung 10 illustriert, d.h. das erste Brühkammerelement 3 ist entlang der axialen Richtung 6 von dem zweiten Brühkammerelement 4 beabstandet. In dieser Ausgangsposition wird nun entlang einer Laderichtung 26 die Portionskapsel 2 durch einen nicht abgebildeten Benutzer in einen Zwischenbereich zwischen das erste und das zweite Brühkammerelement 3, 4 eingeführt. Ein als Teil des zweiten Brühkammerelements 4 ausgebildetes Gehäuse der Brühvorrichtung 1 weist dazu eine Zuführöffnung 42 auf, durch welche die Portionskapsel 2 eingeführt wird. Das erste Brühkammerelement 3 ist dabei derart gegenüber dem zweiten Brühkammerelement 4 verkippt, dass die Endfläche 8 sowohl gegenüber der Laderichtung 26, als auch gegenüber einer zur axialen Richtung 6 senkrechten Ebene 9, insbesondere um einen Winkel zwischen 2 und 10 Grad, geneigt ist. Durch diese Neigung ist der der Zuführöffnung 42 zugewandte Bereich des ersten Brühkammerelements 3 am weitesten von dem zweiten Brühkammerelement 4 entfernt, so dass die Portionskapsel 2 in den Zwischenbereich einführbar ist, ohne dass dabei ein Verhaken der Portionskapsel 2 mit den ersten Perforationsmitteln 18 droht.

In **Figur 1b** ist illustriert, dass die Portionskapsel 2 unter Schwerkrafteinwirkung seitlich in den Bereich zwischen dem ersten und dem zweiten Brühkammerelement 3, 4 fällt und dort auf dem Kapselanschlag 12 aufliegt. Gleichzeitig wird durch die seitlichen Halteärmchen 35 ein Kippen der Portionskapsel 2 in Richtung des zweiten Brühkammerelements 4 verhindert, indem der Kapselflansch 27 in Richtung des zweiten Brühkammerelements 4 an den Halteärmchen 35 abgestützt wird, so dass die Portionskapsel 2 im Wesentlichen axial entlang der axialen Richtung 6 ausgerichtet ist. Der Kapseldeckel 25, sowie der Kapselboden 29 sind folglich im Wesentlichen parallel zur Ebene 9 und zur Laderichtung 26 ausgerichtet. Durch die Neigung des ersten Brühkammerelements 3 wird ein Kontakt zwischen den ersten Perforationsmitteln 18 und dem Kapseldeckel 25 weitgehend vermieden. Der Kapselanschlag 12 weist optional auf seinem freien äußeren Ende eine Kante auf, welche ein ungewolltes Abrutschen des Kapselflansches 27 vom Kapselanschlag 12 verhindert. Ferner ist der Kapselanschlag 12 vorzugsweise in Richtung der Laderichtung 26 leicht geneigt. Der Kapselauswerfer 5 weist ein freies Ende auf, welches entlang der Ebene 9 zumindest teilweise auf gleicher Höhe mit dem Kapselanschlag 12 und somit auch mit dem Kapselflansch 27 verläuft. Auf einer dem zweiten Brühkammerelement 4 abgewandten Seite weist das freie Ende eine gegenüber der Ebene 9 geneigte Führungsschräge 15 auf, so dass der Kapselflansch 27 von dem ersten Brühkammerelement 3 in einfacher Weise über den Kapselauswerfer 5 in Richtung des zweiten Brühkammerelements 4 geschoben werden kann, ohne dass der Kapselflansch 27 dabei vom Kapselanschlag 12 rutscht.

Im nächsten Schritt, illustriert anhand der **Figur 1c** wird das erste Brühkammerelement 3 über ein Kniehebelgelenk 28 zu einer linearen Verschiebung entlang der axialen Richtung 6 in Richtung des zweiten Brühkammerelements 4 angetrieben. Die Orientierung der Portionskapsel 2 bleibt dabei gegenüber der in Figuren 1a und 1b gezeigten Ladestellung 10 konstant. Das erste Brühkammerelement 3 wird mittels eines Querbolzens 35 in einer als Langloch ausgebildeten seitlichen Führungsschiene 16 geführt, wobei das erste Brühkammerelement 3 in Figur 1c zunächst entlang eines ausschließlich axial verlaufenden Abschnitts der Führungsschiene 16 verläuft. Durch andauernde Bewegung des ersten Brühkammerelements 3 in Richtung des zweiten Brühkammerelements 4 wird nachfolgend die Portionskapsel 2 sukzessive in den Hohlraum des Glockenelements 21 eingeführt.

Anhand der **Figur 1d** wird illustriert, dass kurz bevor oder während der Kapselboden 29 das zweite Perforationsmittel 19 berührt, der Querbolzen 35 einen Versatz 17 in der Führungsschiene 16 passiert, wodurch das erste Brühkammerelement 3 eine Schwenkbewegung um eine (insbesondere entlang der axialen Richtung 6 wandernde) Schwenkachse 7 durchführt. Das erste Brühkammerelement 3 wird dabei soweit verschwenkt, dass die Endfläche 8 parallel zur Ebene 7 und damit senkrecht zur axialen Richtung 6 ausgerichtet wird. Das erste und das zweite Brühkammerelement 3, 4 sind somit im Wesentlichen zueinander parallel ausgerichtet. Die ersten Perforationsmittel 18 gelangen nun in Kontakt mit dem Kapseldeckel 25.

Im nächsten Schritt, dargestellt in **Figur 1e****,** wird durch die andauernde Bewegung des ersten Brühkammerelements 3 in Richtung des zweiten Brühkammerelements 4 der Kapseldeckel 25 durch die als Perforationsspitzen ausgebildeten ersten Perforationsmittel 18 perforiert. Der Querbolzen 35 wird nun auf einem weiteren ausschließlich parallel zur axialen Richtung 6 verlaufenden Abschnitt der Führungsschiene 16 geführt. Der Versatz 17 ist demnach zwischen zwei ausschließlich entlang der axialen Richtung 6 verlaufenden Abschnitten der Führungsschiene 16 angeordnet. Der Versatz 17 ist lediglich in den Figuren 1a, 1b und 1k zu erkennen, da er in den übrigen Figuren von dem ersten Brühkammerelement 3 verdeckt ist. Der Kapselboden 29 ist zu dem in Figur 1d illustrierten Zeitpunkt noch nicht perforiert.

In **Figur 1f** ist das erste Brühkammerelement 3 bis zum zweiten Brühkammerelement 4 entlang der axialen Richtung 6 in die Extraktionsstellung 11 verschoben, so dass die Portionskapsel 2 nahezu vollständig in den Hohlraum des hohlen Glockenelement 21 eingeführt ist und der Kapselboden 29 nun durch das als Aufstechdorn ausgebildete zweite Perforationsmittel 19 perforiert ist. Das erste und das zweite Brühkammerelement 3, 4 bilden somit eine hermetisch geschlossene Brühkammer 1', in welcher die Portionskapsel 2 angeordnet ist. Der Kapselflansch 27 ist dabei zwischen dem ersten und dem zweiten Brühkammerelement 3, 4 insbesondere mittels eines elastischen Dichtrings 36 fest eingeklemmt. Der Kapselanschlag 12 ist dabei unterhalb des zweiten Brühkammerelements 4 angeordnet.

In dieser Stellung wird der Extraktionsvorgang eingeleitet, d.h. der Brühkammer 1' wird Extraktionsflüssigkeit in Form von druckbeaufschlagtem und erhitztem Wasser zugeführt. Die Extraktionsflüssigkeit wird dabei durch den Wasserzuführkanal 32 zu den Wasseraustrittsöffnungen gefördert und gelangt von dort durch die mittels der ersten Perforationsmittel 18 erzeugten Perforationsöffnungen im Kapseldeckel 25 in die Portionskapsel 2. Die Getränkesubstanz wird von der Extraktionsflüssigkeit durchströmt, so dass sich ein Getränkeextrakt bildet, welcher die Portionskapsel 2 durch das mittels des Aufstechdorns im Kapselboden 29 erzeugte Perforationsloch wieder verlässt und durch die Vertiefung 23 in den Ablaufkanal 24 gelangt. Mittels des Ablaufkanals 24 wird der Getränkeextrakt vorzugsweise direkt einem nicht abgebildeten Trinkgefäß, wie beispielsweise einer Kaffeetasse, zugeführt.

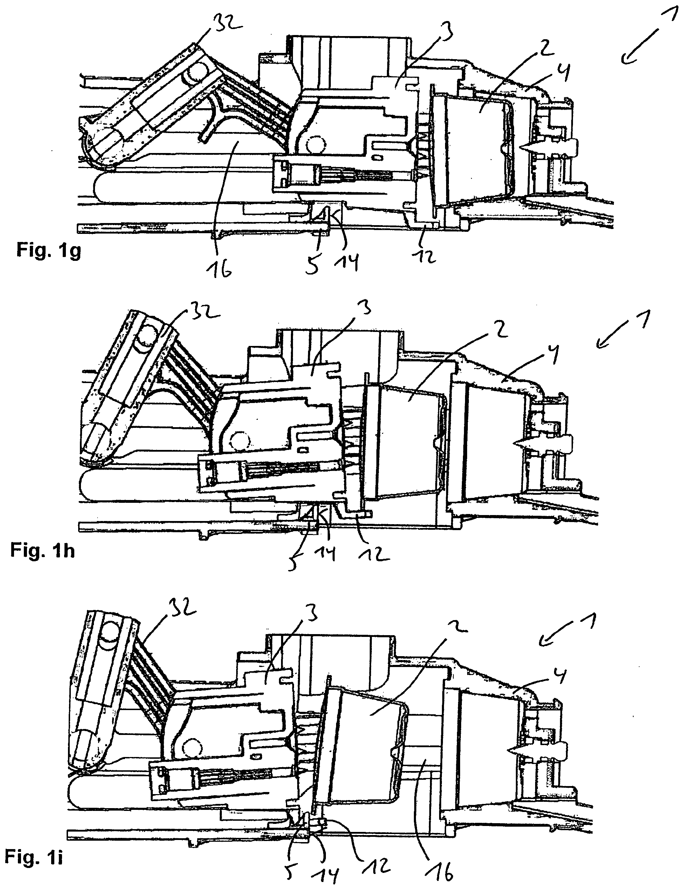

Nach dem Extraktionsvorgang wird das erste Brühkammerelement 3 von der Extraktionsstellung 11 wieder zurück in Richtung der Ladestellung 10 bewegt. Die extrahierte Portionskapsel 2 wird dabei mittels der Halteärmchen 34 wieder aus dem Hohlraum des Glockenelements 21 herausgezogen und in Richtung der Ladestellung 10 transportiert. Dies ist anhand von **Figuren 1g und 1h** illustriert, wobei während dieser Rückwärtsbewegung der Querbolzen 35 wieder den Versatz 17 in der Führungsschiene 16 passiert, wodurch das erste Brühkammerelement 3 gegenüber der Ebene 17 und der Laderichtung 26 wieder in eine geneigte Position gebracht wird. Durch das andauernde Zurückfahren des ersten Brühkammerelements 3 stößt der Kapselflansch 27, wie in **Figur 1i** illustriert wird, an eine dem zweiten Brühkammerelement 4 zugewandte Anschlagsfläche 14 des Kapselauswerfers 5.

Anhand von **Figur 1j** wird illustriert, dass durch den Anschlag des Kapselflansches 27 an die Anschlagsfläche 14 die Portionskapsel 2 während der Rückwärtsbewegung des ersten Brühkammerelements 3 von dem Kapselanschlag 12 geschoben wird. Die verbrauchte Portionskapsel 2 fällt anschließend unter Schwerkrafteinwirkung selbstständig aus dem Bereich zwischen dem ersten und dem zweiten Brühkammerelement 3, 4, beispielsweise in einen nicht gezeigten Auffangbehälter.

Anschließend befindet sich das erste Brühkammerelement 3, wie in **Figur 1k** gezeigt, wieder in der Ladeposition 10, so dass eine erneute Befüllung der Brühvorrichtung 1 mit einer unverbrauchten Portionskapsel 2 gemäß Figur 1a möglich ist.

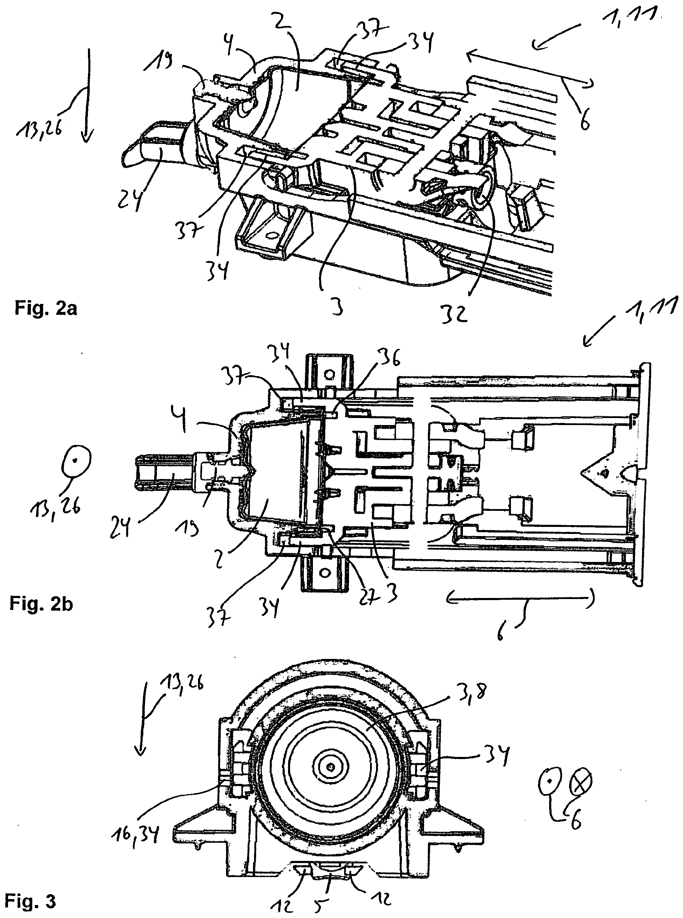

In **Figuren 2a und 2b** zeigen weitere schematische Schnittbildansichten einer Brühvorrichtung 1 gemäß der ersten Ausführungsform. In Figur 2a ist die Brühvorrichtung 1 in einer perspektivischen Schnittbildansicht entlang einer zur Laderichtung 26 senkrechten Schnittebene dargestellt, während diese Schnittbildansicht in Figur 2b in einer Aufsichtsdarstellung entlang der Laderichtung 26 illustriert ist. Das erste Brühkammerelement 3 befindet sich dabei jeweils in der Extraktionsstellung 11. Es ist zu erkennen, dass die seitlichen Halteärmchen 35 in der Extraktionsstellung in seitliche Einbuchtungen 37 des zweiten Brühkammerelements 4 gefahren werden.

In **Figur 3** ist eine Frontalansicht des ersten Brühkammerelements 3 einer Brühvorrichtung 1 gemäß der ersten Ausführungsform dargestellt, wobei das erste Brühkammerelement 3 aus Sicht des zweiten Brühkammerelements 4 entlang der axialen Richtung 6 illustriert ist und wobei aus Gründen der Übersichtlichkeit keine ersten Perforationsmittel 18 und keine Wasseraustrittsöffnungen dargestellt sind.

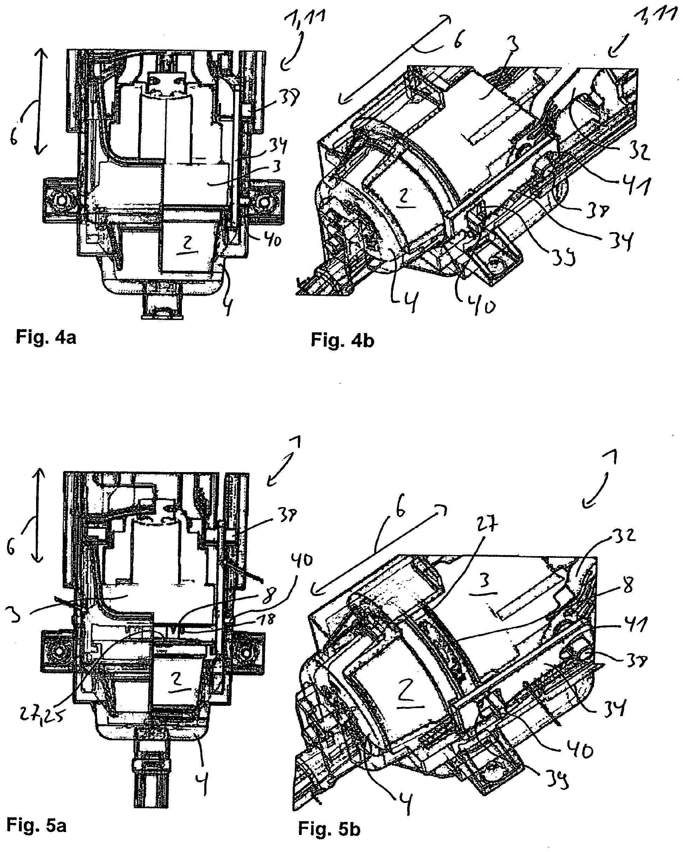

In **Figuren 4a und 4b** sind schematische Schnittbildansichten einer Brühvorrichtung 1 gemäß einer zweiten Ausführungsform dargestellt, wobei die zweite Ausführungsform im Wesentlichen der in Figuren 1a bis 3 illustrierten ersten Ausführungsform gleicht. Das erste Brühkammerelement 3 ist in den Figuren 4a und 4b in der Extraktionsstellung 11 illustriert. Die Halteärmchen 34 sind bei der zweiten Ausführungsform im Unterschied zur ersten Ausführungsform nicht einstückig und starr mit dem ersten Brühkammerelement 3 verbunden, sondern stattdessen jeweils über ein erstes Langloch 39 mit einem ersten Bolzen 40 des ersten Brühkammerelements 3 beweglich gekoppelt und über ein zweites Langloch 41 mit einer Drehachse 38 des Kniehebelgelenks 28 beweglich gekoppelt. Jedes Halteärmchen 34 ist somit entlang der axialen Richtung 6 relativ zum ersten Brühkammerelement 3 verschiebbar gelagert.

In **Figuren 5a und 5b** sind weitere schematische Schnittbildansichten der Brühvorrichtung 1 gemäß der zweiten Ausführungsform dargestellt, wobei das erste Brühkammerelement 3 nicht wie in den Figuren 4a und 4b in der Extraktionsstellung 11 angeordnet ist, sondern bereits geringfügig von der Extraktionsstellung 11 zurück in Richtung der Ladestellung 10 bewegt ist. Die Halteärmchen 34 sind daher gegenüber dem ersten Brühkammerelement 3 verschoben, so dass der Kapseldeckel 25 von der Endfläche 8 leicht beabstandet ist.

### Bezugszeichenliste

- 1: Brühvorrichtung
- 1': Brühkammer
- 2: Portionskapsel
- 3: Erstes Brühkammerelement
- 4: Zweites Brühkammerelement
- 5: Kapselauswerfer
- 6: Axiale Richtung
- 7: Schwenkachse
- 8: Endfläche
- 9: Ebene
- 10: Ladestellung
- 11: Extraktionsstellung
- 12: Kapselanschlag
- 13: Schwerefeld
- 14: Anschlagsfläche
- 15: Führungsschräge
- 16: Führungsschienen
- 17: Versatz
- 18: Erste Perforationsmittel
- 19: Zweite Perforationsmittel
- 20: Zuführeinrichtung
- 21: Glockenelement
- 22: Bodenbereich
- 23: Vertiefung
- 24: Ablaufkanal
- 25: Kapseldeckel
- 26: Laderichtung
- 27: Kapselflansch
- 28: Kniehebelgelenk
- 29: Kapselboden
- 30: Verschlusselement
- 31: Kegelstumpf
- 32: Wasserzuführkanal
- 33: Nuten
- 34: Halteärmchen
- 35: Querbolzen
- 36: Dichtring
- 37: Einbuchtung
- 38: Drehachse
- 39: Erstes Langloch
- 40: Erster Bolzen
- 41: Zweites Langloch
- 42: Zuführöffnung

## Patentansprüche

1. Brühvorrichtung (1) zum Extrahieren einer Portionskapsel (2) mit einem ersten Brühkammerelement (3) und einem zweiten Brühkammerelement (4), wobei das erste Brühkammerelement (3) zwischen einer Ladestellung (10), in welcher das erste und das zweite Brühkammerelement (3, 4) voneinander beabstandet sind, und einer Extraktionsstellung (11), in welcher das erste und das zweite Brühkammerelement (3, 4) zur Bildung einer im Wesentlichen geschlossenen Brühkammer (1') einander angenähert sind, bewegbar ist, wobei
die Brühvorrichtung (1) derart ausgebildet ist, dass bei der Bewegung zwischen der Ladestellung (10) und der Extraktionsstellung (11) das erste Brühkammerelement (3) eine lineare Verschiebung entlang einer axialen Richtung (6) durchführt, wenn das erste und das zweite Brühkammerelement (3, 4) voneinander beabstandet sind, und zusätzlich eine Schwenkbewegung um eine zur axialen Richtung (6) senkrechte Schwenkachse (7) durchführt, wenn das erste und das zweite Brühkammerelement (3, 4) zumindest teilweise einander angenähert sind, wobei hierfür das erste Brühkammerelement (3) mittels seitlicher Führungsschienen (16) zwischen der Ladestellung (10) und der Extraktionsstellung (11) geführt ist, wobei die Führungsschienen (16) sich im Wesentlichen entlang der axialen Richtung (6) erstrecken und auf einem dem zweiten Brühkammerelement (4) zugewandten Bereich jeweils einen Versatz (17) senkrecht zur axialen Richtung (6) aufweisen, wobei der Versatz zwischen zwei ausschließlich entlang der axialen Richtung verlaufenden Abschnitten der jeweiligen Führungsschiene angeordnet ist, wobei das erste Brühkammerelement (3) wenigstens einen Kapselanschlag (12) zum Halten der Portionskapsel (2) aufweist, welcher starr mit dem ersten Brühkammerelement (3) verbunden ist und welcher im Wesentlichen unterhalb der Brühkammer (1') angeordnet ist.

2. Brühvorrichtung (1) nach Anspruch 1, **dadurch gekennzeichnet, dass** die Brühvorrichtung (1) wenigstens einen Kapselauswerfer (5) aufweist, welcher im Wesentlichen unterhalb der Brühkammer (1') angeordnet ist und welcher beim Bewegen des ersten Brühkammerelements (3) von der Extraktionsstellung (11) in die Ladestellung (10) ein Abstreifen der Portionskapsel (2) von einem mit dem ersten Brühkammerelement (3) starr verbundenen Kapselanschlag (12) bewirkt.

3. Brühvorrichtung (1) nach Anspruch 2, **dadurch gekennzeichnet, dass** der Kapselauswerfer (5) einen sich im Wesentlichen entlang der axialen Richtung (6) erstreckenden Arm mit einem freistehenden Ende aufweist, wobei das freistehende Ende in Richtung des zweiten Brühkammerelements (4) eine zur axialen Richtung (6) im Wesentlichen senkrechte Anschlagsfläche (14) aufweist, welche beim Bewegen des ersten Brühkammerelements (3) von der Extraktionsstellung (11) in die Ladestellung (10) ein Abstreifen der Portionskapsel (2) vom Kapselanschlag (12) bewirkt, und wobei das freistehende Ende auf einer dem zweiten Brühkammerelement (4) abgewandten Seite eine Führungsschräge (15) aufweist, welche beim Bewegen des ersten Brühkammerelements (3) von der Ladestellung (10) in die Extraktionsstellung (11) ein Verweilen der Portionskapsel (2) auf dem Kapselanschlag (12) erlaubt.

4. Brühvorrichtung (1) nach einem der vorhergehenden Ansprüche, **dadurch gekennzeichnet, dass** das erste Brühkammerelement (3) erste Perforationsmittel (18) aufweist, welche senkrecht von der Endfläche (8) in Richtung des zweiten Brühkammerelements (4) abstehen und welche vorzugsweise antiparallel zum Schwerefeld (13) im Wesentlichen in einem dem Kapselanschlag (12) abgewandten Bereich der Endfläche (8) angeordnet sind.

5. Brühvorrichtung nach Anspruch 4, **dadurch gekennzeichnet, dass** die Brühvorrichtung (1) derart ausgebildet ist, dass die Portionskapsel (2) während der Schwenkbewegung um die Schwenkachse (7) von den ersten Perforationsmitteln (18) perforiert wird.

6. Brühvorrichtung nach Anspruch 4, **dadurch gekennzeichnet, dass** das erste Brühkammerelement (3) eine Zuführeinrichtung (20) umfasst, welche in der Extraktionsstellung (11) zum Zuführen von Extraktionsflüssigkeit in die mittels der ersten Perforationsmittel (18) perforierten Portionskapsel (2) vorgesehen ist.

7. Brühvorrichtung nach einem der vorhergehenden Ansprüche, **dadurch gekennzeichnet, dass** das erste Brühkammerelement (3) mit seitlichen Halteärmchen (34) gekoppelt ist, welche einen Kapselflansch (27) der Portionskapsel (2) hintergreifen und welche mit dem ersten Brühkammerelement (3) zumindest teilweise zwischen der Ladestellung (10) und der Extraktionsstellung (11) entlang der axialen Richtung (6) bewegbar sind.

8. Brühvorrichtung nach Anspruch 7, **dadurch gekennzeichnet, dass** die Halteärmchen (34) entlang der axialen Richtung (6) relativ zum ersten Brühkammerelement (3) starr oder bewegbar sind und/oder dass die Halteärmchen (34) mit einem Kniehebelgelenk (28) gekoppelt sind, welches zum Bewegen des ersten Brühkammerelements (3) zwischen der Ladestellung (10) und der Extraktionsstellung (11) vorgesehen ist.

9. Brühvorrichtung (1) nach einem der vorhergehenden Ansprüche, **dadurch gekennzeichnet, dass** das zweite Brühkammerelement (4) wenigstens ein zweites Perforationsmittel (19) aufweist, welches sich vom zweiten Brühkammerelement (4) im Wesentlichen parallel zur axialen Richtung (6) in Richtung des ersten Brühkammerelements (3) erstreckt.

10. Brühvorrichtung (1) nach Anspruch 9, **dadurch gekennzeichnet, dass** das zweite Brühkammerelement (4) ein hohles Glockenelement (21) zur Aufnahme der Portionskapsel (2) in der Extraktionsstellung (11) umfasst, wobei ein Bodenbereich (22) des Glockenelements (21) bevorzugt wenigstens eine Vertiefung (23) zum Ableiten von Extraktionsflüssigkeit aus der mittels des zweiten Perforationsmittels (19) perforierten Portionskapsel (2) umfasst, wobei das zweite Perforationsmittel (19) besonders bevorzugt im Bereich der Vertiefung (23) angeordnet ist und wobei die Vertiefung (23) ganz besonders bevorzugt in einen Ablaufkanal (24) zum Abführen der Extraktionsflüssigkeit aus der Brühkammer (1') mündet.

11. Brühvorrichtung (1) nach einem der vorhergehenden Ansprüche, **dadurch gekennzeichnet, dass** in der Extraktionsstellung (11) der Kapselanschlag (12) im Wesentlichen unterhalb des zweiten Brühkammerelements (4) angeordnet ist und/oder in der Extraktionsstellung (11) die Halteärmchen (34) jeweils seitlich neben dem zweiten Brühkammerelement (4) angeordnet sind.

12. Verfahren zum Betrieb einer Brühvorrichtung (1) nach einem der vorhergehenden Ansprüche, wobei in einem ersten Verfahrensschritt eine Portionskapsel (2) zwischen das erste und das zweite Brühkammerelement (3, 4) eingeführt wird und wobei in einem nachfolgenden zweiten Verfahrensschritt das erste Brühkammerelement (3) von der Ladestellung (10) in die Extraktionsstellung (11) bewegt wird, wobei während des zweiten Verfahrensschrittes das erste Brühkammerelement (3) zunächst entlang einer axialen Richtung (6) linear verschoben wird und anschließend zusätzlich um eine zur axialen Richtung (6) senkrechte Schwenkachse (7) verschwenkt wird.

13. Verfahren nach Anspruch 12, **dadurch gekennzeichnet, dass** die in der Ladestellung (10) zwischen das erste und das zweite Brühkammerelement (3, 4) eingeführte Portionskapsel (2) mittels des Kapselanschlags (12) gehalten wird, wobei die Portionskapsel (2) mittels eines Kapselauswerfers (5) außer Kontakt mit dem Kapselanschlag (12) gebracht wird, während in einem dritten Verfahrensschritt das erste Brühkammerelement (3) von der Extraktionsstellung (11) in die Ladestellung (10) bewegt wird.

14. Verfahren nach einem der Ansprüche 12 oder 13, **dadurch gekennzeichnet, dass** im zweiten Verfahrensschritt die Portionskapsel (2) während oder zeitlich nach der Schwenkbewegung des ersten Brühkammerelements (3) mittels erster Perforationsmittel (18) des ersten Brühkammerelements (3) perforiert wird, wobei im zweiten Verfahrensschritt die Portionskapsel (2) beim Erreichen der Extraktionsstellung mittels wenigstens eines zweiten Perforationsmittels (19) des zweiten Brühkammerelements (4) perforiert wird, wobei die Perforierung mittels des zweiten Perforierungsmittels (19) zeitlich nach der Perforierung mittels des ersten Perforierungsmittels (18) durchgeführt wird.

## Claims

1. Brewing device (1) for extracting a portion capsule (2), comprising a first brewing chamber element (3) and a second brewing chamber element (4), wherein the first brewing chamber element (3) is movable between a loading position (10), in which the first and the second brewing chamber elements (3, 4) are spaced apart from each other, and an extraction position (11), in which the first and the second brewing chamber elements (3, 4) are brought closer together in order to form a substantially closed brewing chamber (1'), wherein the brewing device (1) is designed in such a manner that, during the movement between the loading position (10) and the extraction position (11), the first brewing chamber element (3) carries out a linear displacement along an axial direction (6) when the first and the second brewing chamber elements (3, 4) are spaced apart from each other, and additionally carries out a pivoting movement about a pivot axis (7) which is perpendicular to the axial direction (6) when the first and the second brewing chamber elements (3, 4) are at least partially brought closer together, wherein for this purpose the first brewing chamber element (3) is guided between the loading position (10) and the extraction position (11) by means of lateral guide rails (16), wherein the guide rails (16) extend substantially along the axial direction (6) and, on a region facing the second brewing chamber element (4), in each case have an offset (17) perpendicular to the axial direction (6), wherein the offset is arranged between two sections of the respective guide rail which run exclusively along the axial direction, the first brewing chamber element (3) has at least one capsule stop (12) for holding the portion capsule (2), which capsule stop is connected rigidly to the first brewing chamber element (3) and which is substantially arranged below the brewing chamber (1').

2. Brewing device (1) according to Claim 1, **characterized in that** the brewing device (1) has at least one capsule ejector (5) which is substantially arranged below the brewing chamber (1') and which, during movement of the first brewing chamber element (3) from the extraction position (11) into the loading position (10), causes the portion capsule (2) to be removed from a capsule stop (12) which is rigidly connected to the first brewing chamber element (3).

3. Brewing device (1) according to Claim 2, **characterized in that** the capsule ejector (5) has an arm which substantially extends along the axial direction (6) and has a free-standing end, wherein the free-standing end in the direction of the second brewing chamber element (4) has a stop surface (14) which is substantially perpendicular to the axial direction (6) and, during the movement of the first brewing chamber element (3) from the extraction position (11) into the loading position (10), causes the portion capsule (2) to be removed from the capsule stop (12), and wherein the free-standing end on a side facing away from the second brewing chamber element (4) has a guide slope (15) which, during the movement of the first brewing chamber element (3) from the loading position (10) into the extraction position (11), permits the portion capsule (2) to remain on the capsule stop (12).

4. Brewing device (1) according to one of the preceding claims, **characterized in that** the first brewing chamber element (3) has first perforation means (18) which protrude perpendicularly from the end surface (8) in the direction of the second brewing chamber element (4) and which are substantially arranged, preferably anti-parallel to the gravitational field (13), in a region of the end surface (8) that faces away from the capsule stop (12).

5. Brewing device according to Claim 4, **characterized in that** the brewing device (1) is designed in such a manner that the portion capsule (2) is perforated by the first perforation means (18) during the pivoting movement about the pivot axis (7) .

6. Brewing device according to Claim 4, **characterized in that** the first brewing chamber element (3) comprises a feeding means (20) which, in the extraction position (11), is provided for feeding extraction liquid into the portion capsule (2) perforated by means of the first perforation means (18) .

7. Brewing device according to one of the preceding claims, **characterized in that** the first brewing chamber element (3) is coupled to lateral retaining arms (34) which engage behind a capsule flange (27) of the portion capsule (2) and which, together with the first brewing chamber element (3), are at least partially movable along the axial direction (6) between the loading position (10) and the extraction position (11).

8. Brewing device according to Claim 7, **characterized in that** the retaining arms (34) are rigid or are movable along the axial direction (6) relative to the first brewing chamber element (3), and/or **in that** the retaining arms (34) are coupled to a toggle lever joint (28) which is provided for moving the first brewing chamber element (3) between the loading position (10) and the extraction position (11).

9. Brewing device (1) according to one of the preceding claims, **characterized in that** the second brewing chamber element (4) has at least one second perforation means (19) which extends from the second brewing chamber element (4) substantially parallel to the axial direction (6) in the direction of the first brewing chamber element (3).

10. Brewing device (1) according to Claim 9, **characterized in that** the second brewing chamber element (4) comprises a hollow bell-shaped element (21) for receiving the portion capsule (2) in the extraction position (11), wherein a base region (22) of the bell-shaped element (21) preferably comprises at least one depression (23) for conducting away extraction liquid from the portion capsule (2) perforated by means of the second perforation means (19), wherein the second perforation means (19) is particularly preferably arranged in the region of the depression (23), and wherein the depression (23) very particularly preferably leads into a drainage channel (24) for removing the extraction liquid from the brewing chamber (1').

11. Brewing device (1) according to one of the preceding claims, **characterized in that**, in the extraction position (11), the capsule stop (12) is substantially arranged below the second brewing chamber element (4), and/or, in the extraction position (11), the retaining arms (34) are each arranged laterally next to the second brewing chamber element (4).

12. Method for operating a brewing device (1), in particular according to one of the preceding claims, wherein, in a first method step, a portion capsule (2) is inserted between the first and the second brewing chamber elements (3, 4), and wherein, in a subsequent second method step, the first brewing chamber element (3) is moved from the loading position (10) into the extraction position (11), wherein, during the second method step, the first brewing chamber element (3) is first of all displaced linearly along an axial direction (6) and is subsequently additionally pivoted about a pivot axis (7) perpendicular to the axial direction (6).

13. Method according to Claim 12, **characterized in that** the portion capsule (2) which is inserted between the first and the second brewing chamber elements (3, 4) in the loading position (10) is held by means of the capsule stop (12), wherein the portion capsule (2) is brought out of contact with the capsule stop (12) by means of a capsule ejector (5) while, in a third method step, the first brewing chamber element (3) is moved from the extraction position (11) into the loading position (10).

14. Method according to either of Claims 12 and 13, **characterized in that**, in the second method step, the portion capsule (2) is perforated by means of first perforation means (18) of the first brewing chamber element (3) during or temporally after the pivoting movement of the first brewing chamber element (3), wherein, in the second method step, the portion capsule (2) is perforated by means of at least one second perforation means (19) of the second brewing chamber element (4) upon reaching the extraction position, wherein the perforation by means of the second perforation means (19) is carried out temporally after the perforation by means of the first perforation means (18).

## Revendications

1. Dispositif d'infusion (1) destiné à la lixiviation d'une dosette (2) avec un premier élément de chambre d'infusion (3) et un deuxième élément de chambre d'infusion (4), dans lequel le premier élément de chambre d'infusion (3) est déplaçable entre une position de chargement (10), dans laquelle le premier et le deuxième éléments de chambre d'infusion (3, 4) sont espacés l'un de l'autre, et une position de lixiviation (11), dans laquelle le premier et le deuxième éléments de chambre d'infusion (3, 4) sont rapprochés l'un de l'autre pour former une chambre d'infusion essentiellement fermée (1),
dans lequel le dispositif d'infusion (1) est configuré de telle manière que, lors du déplacement entre la position de chargement (10) et la position de lixiviation (11), le premier élément de chambre d'infusion (3) effectue un déplacement linéaire le long d'une direction axiale (6) lorsque le premier et le deuxième éléments de chambre d'infusion (3, 4) sont espacés l'un de l'autre, et effectue en outre un mouvement de pivotement autour d'un axe de pivotement (7) perpendiculaire à la direction axiale (6), lorsque le premier et le deuxième éléments de chambre d'infusion (3, 4) sont au moins en partie rapprochés l'un de l'autre, dans lequel le premier élément de chambre d'infusion (3) est à cet effet guidé au moyen de rails de guidage latéraux (16) entre la position de chargement (10) et la position de lixiviation (11), dans lequel les rails de guidage (16) s'étendent essentiellement le long de la direction axiale (6) et présentent respectivement sur une région tournée vers le deuxième élément de chambre d'infusion (4) un décalage (17) perpendiculairement à la direction axiale (6), dans lequel le décalage est disposé entre deux parties du rail de guidage respectif qui s'étendent exclusivement le long de la direction axiale, dans lequel le premier élément de chambre d'infusion (3) présente au moins une butée de capsule (12) pour retenir la dosette (2), qui est rigidement assemblée au premier élément de chambre d'infusion (3) et qui est disposée essentiellement en dessous de la chambre d'infusion (1).

2. Dispositif d'infusion (1) selon la revendication 1, **caractérisé en ce que** le dispositif d'infusion (1) présente au moins un éjecteur de capsule (5), qui est disposé essentiellement en dessous de la chambre d'infusion (1) et qui, lors du déplacement du premier élément de chambre d'infusion (3) de la position de lixiviation (11) à la position de chargement (10), provoque un écartement de la dosette (2) d'une butée de capsule (12) rigidement assemblée au premier élément de chambre d'infusion (3).

3. Dispositif d'infusion (1) selon la revendication 2, **caractérisé en ce que** l'éjecteur de capsule (5) présente un bras s'étendant essentiellement le long de la direction axiale (6) avec une extrémité libre, dans lequel l'extrémité libre présente en direction du deuxième élément de chambre d'infusion (4) une face de butée (14) essentiellement perpendiculaire à la direction axiale (6), qui lors du déplacement du premier élément de chambre d'infusion (3) de la position de lixiviation (11) à la position de chargement (10) provoque un écartement de la dosette (2) de la butée de capsule (12), et dans lequel l'extrémité libre présente sur un côté détourné du deuxième élément de chambre d'infusion (4) une rampe de guidage (15), qui lors du déplacement du premier élément de chambre d'infusion (3) de la position de chargement (10) à la position de lixiviation (11) permet un séjour de la dosette (2) sur la butée de capsule (12).

4. Dispositif d'infusion (1) selon l'une quelconque des revendications précédentes, **caractérisé en ce que** le premier élément de chambre d'infusion (3) présente des premiers moyens de perforation (18), qui sont saillants perpendiculairement sur la face d'extrémité (8) en direction du deuxième élément de chambre d'infusion (4) et qui sont disposés de préférence de façon antiparallèle au champ de gravité (13) essentiellement dans une région de la face d'extrémité détournée de la butée de capsule (12).

5. Dispositif d'infusion selon la revendication 4, **caractérisé en ce que** le dispositif d'infusion (1) est configuré de telle manière que la dosette (2) soit perforée par les premiers moyens de perforation (18) pendant le mouvement de pivotement autour de l'axe de pivotement (7).

6. Dispositif d'infusion selon la revendication 4, **caractérisé en ce que** le premier élément de chambre d'infusion (3) comprend un dispositif d'alimentation (20), qui est prévu pour, dans la position de lixiviation (11), fournir du liquide de lixiviation dans la dosette (2) perforée au moyen des premiers moyens de perforation (18).

7. Dispositif d'infusion selon l'une quelconque des revendications précédentes, **caractérisé en ce que** le premier élément de chambre d'infusion (3) est couplé à des petits bras de retenue latéraux (34), qui accrochent un rebord de capsule (27) de la dosette (2) et qui sont déplaçables avec le premier élément de chambre d'infusion (3) au moins partiellement entre la position de chargement (10) et la position de lixiviation (11) le long de la direction axiale (6).

8. Dispositif d'infusion selon la revendication 7, **caractérisé en ce que** les petits bras de retenue (34) sont fixes ou déplaçables le long de la direction axiale (6) par rapport au premier élément de chambre d'infusion (3) et/ou **en ce que** les petits bras de retenue (34) sont couplés à une articulation à genouillère (28), qui est prévue pour le déplacement du premier élément de chambre d'infusion (3) entre la position de chargement (10) et la position de lixiviation (11).

9. Dispositif d'infusion (1) selon l'une quelconque des revendications précédentes, **caractérisé en ce que** le deuxième élément de chambre d'infusion (4) présente au moins un deuxième moyen de perforation (19), qui s'étend à partir du deuxième élément de chambre d'infusion (4) essentiellement parallèlement à la direction axiale (6) en direction du premier élément de chambre d'infusion (3).

10. Dispositif d'infusion (1) selon la revendication 9, **caractérisé en ce que** le deuxième élément de chambre d'infusion (4) comprend un élément creux en cloche (21) destiné à recevoir la dosette (2) dans la position de lixiviation (11), dans lequel une région de fond (22) de l'élément en cloche (21) comprend de préférence au moins un creux (23) pour évacuer du liquide de lixiviation hors de la dosette (2) perforée au moyen du deuxième moyen de perforation (19), dans lequel le deuxième moyen de perforation (19) est de préférence encore disposé dans la région du creux (23) et dans lequel le creux (23) débouche de façon très particulièrement préférée dans un canal d'écoulement (24) pour évacuer le liquide de lixiviation hors de la chambre d'infusion (1).

11. Dispositif d'infusion (1) selon l'une quelconque des revendications précédentes, **caractérisé en ce que** dans la position de lixiviation (11) la butée de capsule (12) est disposée essentiellement en dessous du deuxième élément de chambre d'infusion (4) et/ou dans la position de lixiviation (11) les petits bras de retenue (34) sont respectivement disposés latéralement à côté du deuxième élément de chambre d'infusion (4).

12. Procédé de fonctionnement d'un dispositif d'infusion (1) selon l'une quelconque des revendications précédentes, dans lequel dans une première étape du procédé on introduit une dosette (2) entre le premier et le deuxième éléments de chambre d'infusion (3, 4) et dans lequel dans une deuxième étape suivante du procédé on déplace le premier élément de chambre d'infusion (3) de la position de chargement (10) à la position de lixiviation (11), dans lequel pendant la deuxième étape du procédé on déplace d'abord linéairement le premier élément de chambre d'infusion (3) le long d'une direction axiale (6) et on le fait ensuite pivoter en outre autour d'un axe de pivotement (7) perpendiculaire à la direction axiale (6).

13. Procédé selon la revendication 12, **caractérisé en ce que** l'on maintient la dosette (2) introduite dans la position de chargement (10) entre le premier et le deuxième éléments de chambre d'infusion (3, 4) au moyen de la butée de capsule (12), dans lequel on rompt le contact de la dosette (2) avec la butée de capsule (12) au moyen d'un éjecteur de capsule (5), pendant que dans une troisième étape du procédé on déplace le premier élément de chambre d'infusion (3) de la position de lixiviation (11) à la position de chargement (10).

14. Procédé selon une des revendications 12 ou 13, **caractérisé en ce que** dans la deuxième étape du procédé on perfore la dosette (2) pendant ou chronologiquement après le mouvement de pivotement du premier élément de chambre d'infusion (3) au moyen de premiers moyens de perforation (18) du premier élément de chambre d'infusion (3), dans lequel dans la deuxième étape du procédé on perfore la dosette (2) à l'arrivée dans la position de lixiviation au moyen d'au moins un deuxième moyen de perforation (19) du deuxième élément de chambre d'infusion (4), dans lequel on effectue la perforation au moyen du deuxième moyen de perforation (19) chronologiquement après la perforation au moyen du premier moyen de perforation (18).
